Europäisches Patentamt

European Patent Office

Office européen des brevets

(11) Veröffentlichungsnummer: 0 252 426
A1

## (12) EUROPÄISCHE PATENTANMELDUNG

(21) Anmeldenummer: 87109474.4

(22) Anmeldetag: 01.07.87

(51) Int. Cl.4: C09D 17/00 , C08G 59/50 ,
C08G 59/56 , C09D 3/58

(30) Priorität: 05.07.86 DE 3622710

(43) Veröffentlichungstag der Anmeldung:
13.01.88 Patentblatt 88/02

(84) Benannte Vertragsstaaten:
ES

(71) Anmelder: BASF Lacke + Farben
Aktiengesellschaft
Max-Winkelmann-Strasse 80
D-4400 Münster(DE)

(72) Erfinder: Ott, Günther, Dr.
Von-Holte-Strasse 101 a
D-4400 Münster(DE)
Erfinder: Geist, Michael, Dr.
Rubensstrasse 251
D-4400 Münster(DE)
Erfinder: Schön, Georg, Dr.
Schillerstrasse 2
D-4416 Everswinkel(DE)

(54) Verfahren zur Herstellung von wässrigen, Epoxid-Aminaddukte enthaltenden Pigmentdispersionen.

(57) Die Erfindung betrifft ein Verfahren zur Herstellung von wäßrigen, Epoxid-Aminaddukte enthaltenden Pigmentdispersionen, bei dem

(A) ein Pigmentpulver in einem flüssigen Epoxidharz dispergiert

(B) die aus (A) erhaltene Dispersion in Wasser dispergiert und

(C) die Epoxidgruppen des Epoxidharzes mit einem oder mehreren Aminen umgesetzt werden. Das erfindungsgemäße Verfahren zeichnet sich dadurch aus, daß in der Stufe (C) 30 bis 100, vorzugsweise 40 bis 95 % der Epoxidgruppen des Epoxidharzes mit einem oder mehreren Aminsalzen unter Bildung von quaternären Ammoniumgruppen umgesetzt werden und schließlich

(D) durch Zugabe von deionisiertem Wasser ein Verarbeitungsfestkörper von 10 bis 70 Gew.-% eingestellt wird.

## Verfahren zur Herstellung von wäßrigen, Epoxid-Aminaddukte enthaltenden Pigmentdispersionen

Die Erfindung betrifft ein Verfahren zur Herstellung von wäßrigen, Epoxid-Aminaddukte enthaltenden Pigmentdispersionen, bei dem

(A) ein Pigmentpulver in einem flüssigen Epoxidharz disgiert

(B) die aus (A) erhaltene Dispersion in Wasser dispergiert

(C) die Epoxidgruppen des Epoxidharzes mit einem oder mehreren Aminen umgesetzt werden.

Bei der Herstellung von wäßrigen Überzugszusammensetzungen werden Pigmente in Form von wäßrigen Pigmentdispersionen in die Überzugszusammensetzungen inkorporiert.

Die gebräuchliste Methode zur Herstellung von wäßrigen Pigmentdispersionen besteht darin, daß die feinteiligen Pigmente in einem geeigneten Bindemittel mit Hilfe mechanischer Methoden (Mahlen...) dispergiert werden.

So wird in der US-PS-3,936,405 und US-PS-4,035,275 die Verwendung von Umsetzungsprodukten aus epoxidgruppenhaltigen Verbindungen mit Aminsalzen, Phospin-oder Sulfid-Säuremischungen zur Herstellung von wäßrigen Pigmentdispersionen beschrieben.

In der EP-A-136743 wird die Herstellung einer wäßrigen, Epoxid-Aminaddukte enthaltenden Pigmentdispersion offenbart, bei der das Pigmentpulver in einem flüssigen Epoxidharz dispergiert wird, die so erhaltene Dispersion in Wasser dispergiert und anschließend mit einem sekundären Amin, gegebenenfalls auch noch mit einem primären Amin umgesetzt wird. Schließlich wird mit Carbonsäure neutralisiert und der gewünschte Festkörper eingestellt.

Die in der EP-A-136743 beschriebenen wäßrigen Pigmentdispersionen sind nachteiligerweise nur bei relativ niederen pH-Werten, die zu hohen Korrosivitäten des Lackmaterials führen, stabil.

Die der vorliegenden Erfindung zugrundeliegende Aufgabenstellung besteht darin, ein neues, verbessertes Verfahren zur Herstellung von wäßrigen, Epoxid-Aminaddukte enthaltenden Pigmentdispersionen bereitzustellen.

Diese Aufgabe kann überraschenderweise gelöst werden, indem in Stufe (C) des auf Seite 1 dieser Beschreibung beschriebenen Verfahrens 30 bis 100, vorzugsweise 40 bis 95 % der Epoxidgruppen des Epoxidharzes mit einem oder mehreren Aminsalzen unter Bildung von quaternären Ammoniumgruppen umgesetzt werden und schließlich (D) durch Zugabe von deionisiertem Wasser ein Verarbeitungsfestkörper von 10 bis 70 Gew.-% eingestellt wird.

Der erste Schritt des erfindungsgemäßen Verfahrens besteht darin, daß ein Pigmentpulver in einem flüssigen Epoxidharz dispergiert wird.

Der Begriff "Pigmentpulver" umfaßt alle wasserunlöslichen festen Lackzusätze, wie z.b. Pigmente, Füller, und Additive. Das Pigmentpulver kann auch aus einer Mischung von verschiedenen wasserunlöslichen festen Lack zusätzen bestehen. Als Beispiele für feste wassrunlösliche Lackzusätze seien Schwerspat, Talkum und Titandioxid genannt. Die mittlere Teilchengröße des Pigmentpulvers sollte unter 30 μm, bevorzugt unter 15 μm liegen.

Als flüssiges Epoxidharz können alle bekannten, unter den Verfahrensbedingungen flüssigen epoxidgruppenhaltigen Verbindungen eingesetzt werden. Besonders bevorzugt werden Polyflycidylether von Polyphenolen, vorzugsweise Diphenolen, wie z.B. Dihydroxydiphenylmethan oder 2,2'-Dihydroxydiphenylpropan eingesetzt. Es können auch perhydrierte Polyglycidylether von Polyphenolen und flüssige epoxidgruppenhaltige Novolake verwendet werden.

In Stufe (A) des erfindungsgemäßen Verfahrens können auch Mischungen von unter den Verfahrensbedingungen flüssigen Epoxidharzen eingesetzt werden.

Nach der Dispergierung der aus Stufe (A) erhaltenen Dispersion in Wasser werden in Stufe (C) 30 bis 100, vorzugsweise 40 bis 95 % der Epoxidgruppen des Epoxidharzes mit einem oder mehreren Aminsalzen unter Bildung von quaternären Ammoniumgruppen umgesetzt.

Die Aminkomponente der Aminsalze kann aus einem primären, sekundären oder tertiären Amin bestehen, wobei die tertiären Amine besonders bevorzugt sind.

Von den tertiären Aminen sind insbesondere Dialkylalkanolamine, z.B. Dimethylethanolamin, Diethylethanolamin, Dibutylethanolamin und Dimethylisopropanolamin geeignet. Besonders bevorzugte Dialkylalkanolamine sind die Dimethylalkanolamine, unter denen sich wiederum das Dimethylethanolamin als besonders geeignete Aminkomponente erwiesen hat.

Weitere geeignete tertiäre Amine sind Amine der allgemeinen Formel $(H_3C)_2N-R$, in der R für einen gesättigten oder ungesättigten Alkylrest, der bevorzugt mehr als 8, besonders bevorzugt 8 bis 18 Kohlenstoffatome enthält, steht.

Die Säurekomponente der Aminsalze besteht bevorzugt aus Monocarbonsäuren. Besonders bevorzugt werden Ameisensäure, Essigsäure und Milchsäure verwendet.

Das Aminsalz wird bevorzugt in Form einer wäßrigen Lösung, zu der in Stufe (B) gebildeten Dispersion zugesetzt und bei Temperaturen von 60 bis 95 °C mit den Epoxidgruppen des Epoxidharzes unter Bildung quaternärer Ammoniumgruppen umgesetzt. Nach Abschluß der Umsetzung wird durch Zugabe von deionisiertem Wasser ein Festkörper von 10 bis 70 Gew.-% eingestellt.

In dem erfindungsgemäßen Verfahren kann in der Stufe (C) neben der Umsetzung mit den Aminsalzen auch noch mit primären und/oder sekundären Aminen und/oder phenolgruppenhaltigen Verbindungen umgesetzt werden. Dabei ist es gleichgültig, in welcher Reihenfolge die Umsetzung mit den Aminsalzen und den übrigen Reaktanten durchgeführt wird.

Bei dem erfindungsgemäßen Verfahren muß stets darauf geachtet werden, daß der Anteil an eingeführten quarternären Amoniumstrukturen so hoch ist, daß eine im gewünschten pH-Bereich ausreichende Stabilität der Pigmentdispersion erreicht wird. Es wird vorzugsweise mit soviel Aminsalz und gegebenenfalls primären und/ oder sekundären Aminen und/oder phenolgruppenhaltigen Verbindungen umgesetzt, daß alle Epoxidgruppen des Epoxidharzes abreagieren.

Als primäre und/oder sekundäre Amine werden vorzugsweise in Wasser lösliche Verbindungen eingesetzt.

Als Beispiele für primäre Amine seien Alkanolamine, wie Ethanolamin oder Isopropanolamin und Alkylamine, wie Butylamin, 2-Ethylhexylamin oder Tridecylamin, genannt.

Beispiele für einsetzbare sekundäre Amine sind Dialkylamine, wie z.B. Di-n-Propylamin, Diisopropylamin, Dibutylamin, Di-2-Ethylhexylamin, Alkylalkanolamine, wie Ethylethanolamin, Propylethanolamin, Butylethanolamin oder Dialkanolamine, wie Diethanolamin oder Diisopropanolamin.

Es kann auch vorteilhafterweise mit Di-sekundären-Di-aminen umgesetzt werden. Amine dieses Typs können beispielsweise durch Umsetzung von Di-primären-Diaminen mit Monoepoxidverbindungen hergestellt werden. Als geeignete Monopoxide seien beispielhaft genannt: Butylenoxid, 2-Ethylhexylglycidylether oder der Glycidylester einer gesättigten, aliphatischen 10 Kohlenstofatome enthaltenden Monocarbonsäure, deren $\alpha$ - Kohlenstoffatom mit einer Methylgruppe und zwei weiteren Alkylgruppen substituiert ist. Als geeignete Di-primäre-Diamine seien beispielhaft genannt: 1,4-Butandiamin, 1,6-Hexandiamin, 4,7-Dioxadekan-1,10-Diamin, 4,9-Dioxadodekan-1,12-Diamin sowie Polyoxipropylen-$\alpha$ -$\omega$ diamin.

Als phenolgruppenhaltige Verbindungen werden vorzugsweise Diphenole, wie z.B. Bisphenol A eingesetzt.

Die Umsetzung mit phenolgruppenhaltigen Verbindungen wird vorzugsweise erst nach Anlagerung der quaternären Ammoniumgruppen durchgeführt. Die Reaktion kann mit allgemein bekannten Katalysatoren, wie z.B. Triarylal kylphosphoniumhalogeniden beschleunigt werden.

Die Aminsalze, primären und/oder sekundären Amine und phenolgruppenhaltigen Verbindungen werden mit den Epoxidgruppen der Epoxidharze, vorzugsweise bei Temperaturen von 60 bis 95 °C, umgesetzt.

Das erfindungsgemäße Verfahren zeichnet sich dadurch aus, daß ohne Anwendung von zeitraubenden und energieaufwendigen mechanischen Dispergierprozessen stabile wäßrige Dispersionen erhalten werden, die innerhalb eines weiten pH-Bereiches stabil sind und aus denen wäßrige Überzugszusammensetzungen gewonnen werden können, die eine geringe Korrosivität aufweisen. Die nach dem erfindungsgemäßen Verfahren hergestellten wäßrigen Pigmentdispersionen werden vorzugsweise zur Herstellung von wäßrigen kathodisch abscheidbaren Elektrotauchlacken verwendet.

Weiter betrifft die Erfindung auch ein Verfahren zur Herstellung von wäßrigen Überzugszusammensetzungen, das dadurch gekennzeichnet ist, daß zu den oben beschriebenen wäßrigen Pigmentdispersionen Vernetzer (z. B. Phenolharze, Melaminharze, blockierte Polyisocyanate, aktivierte Estergruppen enthaltende Verbindungen...) gegebenenfalls weitere Bindemittel (vorzugsweise Epoxid-Aminaddukte) und übliche Lackadditive (Stabilisatoren, Verlaufshilfsmittel...) zugesetzt werden und der Festkörper der so erhaltenen Überzugszusammensetzungen durch Zugabe von Wasser auf 10 bis 70 Gewichtsprozent eingestellt wird.

Die erfindungsgemäßen wäßrigen Überzugszusammensetzungen können nach allgemein bekannten Methoden, wie z.B. Tauchen, Spritzen, Rakeln und Aufstreichen appliziert werden.

Die Erfindung wird in den folgenden Beispielen näher erläutert. Alle Angaben über Teile und Prozentsätze sind Gewichtsangaben, falls nicht ausdrücklich etwas anderes festgestellt wird.

Herstellung einer wäßrigen Aminsalzlösung

In einem geeigneten Gefäß werden 660 g entionisiertes Wasser vorgelegt und auf 80 °C erhitzt. Hierzu gibt man 1000 g Milchsäure (90 %ige Lösung in Wasser) und hält 15 Minuten diese Temperatur. Danach kühlt man auf 60 °C ab und gibt unter weiterem Kühlen 840 g Dimethylethanolamin zu. Es resultiert eine 70 %ige wäswäßrige Lösung des Dimethylethanolaminmilchsäuresalzes.

## Herstellung einer Pigmentzubereitung A

517 g Titandioxid und 648 g Bariumsulfat werden gemischt und portionsweise unter schnellem Rühren in 944 g eines handelsüblichen Epoxidharzes auf Basis Bisphenol A (Epoxidäquivalentgewicht 188), das auf 60 °C erwärmt worden ist, eingetragen. Nach der letzten Zugabe wird noch 30 Minuten kräftig weitergerührt. Danach gibt man bei 60 °C 678 g entionisiertes Wasser zu. Dann rührt man 15 Minuten bei 60 °C weiter und gibt 637 g der oben beschriebenen Dimethylethanolaminmilchsäuresalzlösung hinzu. Die Temperatur wird dann auf 70 °C erhöht und 1 Stunde gehalten. Hierauf werden 75 g Ethanolamin hinzugesetzt, die Temperatur auf 80 °C erhöht und 2 Stunden gehalten. Anschließend wird die erhaltene wäßrige Pigmentdispersion abgekühlt. Die Pigmentdispersion ist lagerstabil, weist eine Hegmann-Feinheit von 7 auf und hat einen Festkörper von 70 Gewichts-%.

## Herstellung einer Pigmentzubereitung B

456 g Titandioxid werden mit 571 g Bariumsulfat innig vermischt und portionsweise unter kräftigem Rühren in 832 g eines handelsüblichen Epoxidharzes auf Basis von Bisphenol A (Epoxidäquivalentgewicht 188), das auf 60 °C erwärmt worden ist, eingetragen. Nach der letzten Zugabe wird noch 30 Minuten kräftig weitergerührt. Dann gibt man bei 60 °C 597 g entionisiertes Wasser zu und rührt 15 Minuten weiter. Anschließend werden 367 g der oben beschriebenen Dimethylethanolaminmilchsäuresalzlösung eingearbeitet. Die Temperatur wird dann auf 70 °C erhöht und 1 Stunde gehalten. Daraufhin gibt man 336 g Bisphenol A zu, erhöht die Temperatur auf 90 °C und hält diese 2 Stunden. Danach werden 341 g entionisiertes Wasser eingearbeitet und die erhaltene wäßrige Pigmentdispersion abgekühlt.

Die Pigmentdispersion ist sehr lagerstabil, weist eine Hegmann-Feinheit von 7 auf und hat einen Festkörper von 70 Gewichts-%.

## Ansprüche

1. Verfahren zur Herstellung von wäßrigen, Epoxid-Aminaddukte enthaltenden Pigmentdispersionen, bei dem

(A) ein Pigmentpulver in einem flüssigen Epoxidharz dispergiert
(B) die aus (A) erhaltene Dispersion in Wasser dispergiert und
(C) die Epoxidgruppen des Epoxidharzes mit einem oder mehreren Aminen umgesetzt werden,
dadurch gekennzeichnet, daß
in der Stufe (C) 30 bis 100, vorzugsweise 40 bis 95 % der Epoxidgruppen des Epoxidharzes mit einem oder mehreren Aminsalzen unter Bildung von quaternären Ammoniumgruppen umgesetzt werden und schließlich
(D) durch Zugabe von deionisiertem Wasser ein Verarbeitungsfestkörper von 10 bis 70 Gew.-% eingestellt wird.

2. Verfahren nach Anspruch 1,
dadurch gekennzeichnet, daß
als flüssiges Epoxidharz ein Polyglycidylether eines Diphenols, vorzugsweise Bisphenol A eingesetzt wird.

3. Verfahren nach einem der Ansprüche 1 oder 2,
dadurch gekennzeichnet, daß
das oder die Aminsalze tertiäre Amine, bevorzugt Dimethylethanolamin als Aminkomponente enthalten.

4. Verfahren nach einem der Ansprüche 1 bis 3,
dadurch gekennzeichnet, daß
das oder die Aminsalze organische Carbonsäuren, vorzugsweise Milchsäure als Säurekomponente enthalten.

5. Verfahren nach einem der Ansprüche 1 bis 4,
dadurch gekennzeichnet, daß
in der Stufe (C) neben der Umsetzung mit einem oder mehreren Aminsalzen noch mit primären und/oder sekundären Aminen und/oder phenolgruppenhaltigen Verbindungen umgesetzt wird.

6. Verfahren nach Anspruch 5,
dadurch gekennzeichnet, daß
als phenolgruppenhaltige Verbindung Bisphenol A eingesetzt wird.

7. Verfahren zur Herstellung von wäßrigen Überzugszusammensetzungen,
dadurch gekennzeichnet, daß
zu einer nach einem der Ansprüche 1 bis 6 hergestellten wäßrigen Pigmentdispersion Vernetzer, gegebenenfalls weitere Bindemittel und sonstige allgemein gebräuchliche Lackadditive zugesetzt werden und der Festkörper der so erhaltenen Überzugszusammensetzung durch Zugabe von Wasser auf 10 bis 70 Gewichts-% eingestellt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 136 743 (SHELL)<br>* Patentansprüche *<br><br>--- | 1-7 | C 09 D 17/00<br>C 08 G 59/50<br>C 08 G 59/56<br>C 09 D 3/58 |
| Y | EP-A-0 107 089 (P.P.G.)<br>* Patentansprüche; Seite 6, Zeilen 10-35; Seite 7, Zeilen 1-32 *<br><br>--- | 1-7 | |
| A | FR-A-2 388 840 (VIANOVA)<br>* Patentansprüche *<br><br>----- | 1 | |

| | RECHERCHIERTE SACHGEBIETE (Int. Cl.4) |
|---|---|
| | C 09 D<br>C 08 G |

Der vorliegende Recherchenbericht wurde für alle Patentansprüche erstellt.

| Recherchenort | Abschlußdatum der Recherche | Prüfer |
|---|---|---|
| DEN HAAG | 12-10-1987 | DERAEDT G. |